# EUROPEAN PATENT APPLICATION

(11) **EP 2 666 524 A1**
(43) Date of publication of application: **27.11.2013**
(21) Application number: 11856176.0
(22) Date of filing: 21.01.2011
(51) Int. Cl.: A63B 69/06, A63B 21/22, F03G 5/00

(54) **EXERCISE ROWING MACHINE WITH POWER GENERATION**

(71) Applicant: Shenzhen Antuoshan Special Machine & Electrical Co., Ltd., Shenzhen, Guangdong 518104 (CN)
(72) Inventor: LIANG, Xiwu, Guangdong 518104 (CN); GUO, Dongliang, Guangdong 518104 (CN); WANG, Heping, Guangdong 518104 (CN); LIANG, Haiyan, Guangdong 518104 (CN); LI, Xiaofan, Guangdong 518104 (CN)
(74) Representative: Hellmich, Wolfgang
(86) International application number: PCT/CN2011/070474
(87) International publication number: WO 2012/097522

(57) **Abstract**

An exercise rowing machine with power generation (100) includes: a main machine frame (10); a seat cushion (20) slidably mounted on the main machine frame (10); a supporting rod (30) mounted on the main machine frame (10); a holding rod (33) mounted on the supporting rod (30); a damping device (40); and a power generation device (50). The damping device (40) includes: a belt wheel (41), which is rotatably mounted on the supporting rod (30) and connected with the belt wheel (41) through a traction band (35); and a pulley block (43), which is mounted on the main machine frame (10) and connected with the belt wheel (41) through an elastic band (45). The power generation device (50) includes: an electric generator (51), which includes an input shaft (11) and is mounted between the main machine frame (10) and the supporting rod (30); a driving belt (53), which connects the belt wheel (41) with the input shaft (511) of the electric generator (51); and a storage battery (70), which is electrically connected with the electric generator (51) and used for storing the electric energy produced by the electric generator (51). The exercise rowing machine with power generation (100) described above is simple in structure, convenient in operation, and safe and eco-friendly during a power generation procedure. It can not only help the user take exercise, but also store the energy produced during the exercise for future use in case of need, which has the effects of saving energy and protecting the environment in a certain degree.

## Description

### Background of the Present Invention

### Field of Invention

The present invention relates to an exercise machine, and more particularly to an exercise rowing machine with dual functions of exercise and power generation.

### Description of Related Arts

Rowing is a water sport. The rower uses his muscles to do machinery rod rowing motion, with a lever comprising a paddle and a rowlock. The racing boat advances backwardly. The rowing sport could effectively improve functions of cardiovascular system and respiratory system, strength generalized muscles energy, adjust balance of nervous system, and improve the health level of human body.

The exercise rowing machine imitates the natural motion of rowing described above, and is adaptable for gymnasium and home. The exercise rowing machine could build up muscles of hands, legs, waist, etc., and effectively exercise stretch muscle groups. The exercise rowing machine has an especially obvious excising effect on waist and back. The exercise rowing machine could relieve ache symptoms of back, and significantly increase physiological activity of waist muscle group at the same time. The exercise rowing machine is adaptable for people lack of sports, and especially for white-collared workers, who sit and work in front of the computers for a long time.

Nowadays, most of the exercise rowing machines in the market provide the motion resistance by the pneumatic cylinder or the magnetic elements. However, the bioenergy produced during the exercising of the user is not be used reasonably.

### Summary of the Present Invention

An object of the present invention is to provide an exercise rowing machine with power generation, which combines exercises with power generation, and makes full use of bioenergy.

The exercise rowing machine with power generation comprises:
a main machine frame;
a seat cushion, slidably mounted on the main machine frame;
a supporting rod, mounted on the main machine frame;
a holding rod, mounted on the supporting rod;
a damping device, comprising:
   a belt wheel, rotatably mounted on the supporting rod, and connected with the holding rod through a traction band, and
   a pulley block, mounted on the main machine frame, and connected with the belt wheel through an elastic band;
   a power generation device, comprising:
      an electric generator, mounted between the main machine frame and the supporting rod, wherein the electric generator comprises an input shaft, and
      a driving belt, connecting the belt wheel with the input shaft of the electric generator; and
      a storage battery, connected with the electric generator, for storing electric energy produced by the electric generator.

In a preferred embodiment, two pedals are mounted on the main machine frame.

In a preferred embodiment, a belt is provided on each of the pedals for fixing feet of a user.

In a preferred embodiment, the exercise rowing machine with power generation further comprises: a connecting bracket, connecting the main machine frame with the supporting rod, wherein the electric generator is mounted on the connecting bracket.

In a preferred embodiment, the exercise rowing machine with power generation further comprises a pressing device comprising: an oscillating rod, a pinch roller pivotally connected with a first end of the oscillating rod, and an elastic element acting on a second end of the oscillating rod, wherein a middle portion of the oscillating rod is rotatably mounted on the connecting bracket, and the pinch roller resists against the driving belt.

In a preferred embodiment, the exercise rowing machine with power generation further comprises a detecting device mounted on a top portion of the supporting rod, and used to detect a rotating speed of the belt wheel.

In a preferred embodiment, the electric generator is a coreless generator with rare earth permanent magnet.

In a preferred embodiment, the exercise rowing machine with power generation further comprises an inverter for adjusting an output current of the storage battery.

The exercise rowing machine with power generation described as above has a simple structure, convenient operations, and a safe and eco-friendly course of electricity generating. The exercise rowing machine with power generation not only exercises the body of the exerciser, but also stores the energy generated during the exercise for later use. In some degree, the exercise rowing machine with power generation saves energy and protects environment.

These and other objectives, features, and advantages of the present invention will become apparent from the following detailed description, the accompanying drawings, and the appended claims.

### Brief Description of the Drawings

The preferred embodiments of the present invention are specifically illustrated in the drawings, in such a manner that the above objects, characteristics, and advantages of the present invention become clearer. Same signs in the drawings refer to a same part. The drawings are not drawn in a uniform scale according to the actual scaling deliberately. The emphasis of the drawings is on showing a purport of the present invention.
Fig. 1 is an assembling perspective view of an exercise rowing machine with power generation according to a preferred embodiment of the present invention.
Fig. 2 is an exploded perspective view of the exercise rowing machine with power generation.

### Detailed Description of the Preferred Embodiment

For the above objects, characteristics, and advantages of the present invention clearer and easier to understand, the embodiments of the present invention are described as follows according to the drawings. The specific details described as follows help to fully understand the present invention. However, the present invention could be implemented by other methods different from the embodiments described as follows. One skilled in the art could extend the embodiments in a condition of not going against the spirit of the present invention, so the embodiments of the present invention disclosed as follows is not intended to be limiting.

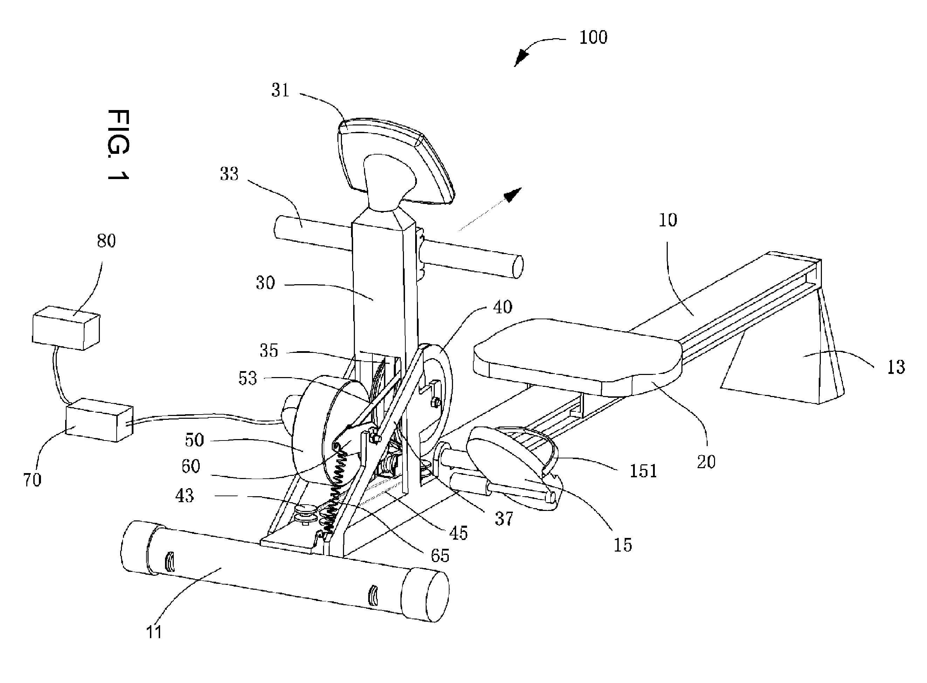

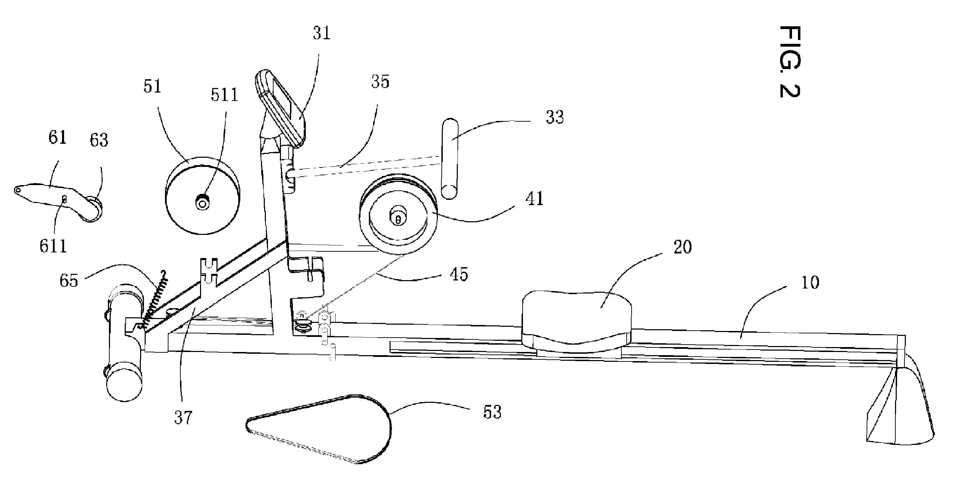

Referring to Fig. 1 and Fig. 2 of the drawings, an exercise rowing machine with power generation 100, according to a preferred embodiment, comprises: a main machine frame 10, a seat cushion 20, a supporting rod 30, a damping device 40, a power generation device 50 and a storage battery 70.

The main machine frame 10 is roughly a level element having a cross section in a shape of lying H. A front end of the main machine frame extends to form a supporting foot 11, and a supporting base 13 is mounted on a rear end of the main machine frame. Both of the supporting foot 11 and the supporting base 13 are used to support the whole main machine frame 10. The seat cushion 20 is slidably mounted on the main machine frame 10. Two pedals 15 are mounted on the main machine frame 10, and a belt 151 is provided on each of the pedals.

The supporting rod 30 is vertically mounted in a position near a middle portion of the main machine frame 10. The supporting rod 30 is a hollow rod, and a detecting device 31 is mounted on a top portion of the supporting rod 30. A holding rod 33 and a traction band 35 connected with the holding rod 33 are mounted under the detecting device 31 on the supporting rod 30. The traction band 35 crosses through the supporting rod 30 and is connected with the damping device 40.

The damping device 40 comprises a belt wheel 41, rotatably mounted in a lower end of the supporting rod 30; a pulley block 43 mounted on the main machine frame 10; and a elastic band 45 connecting the belt wheel 41 with the pulley block 43. A first end of the traction band 35 twines around the belt wheel 41. In the embodiment, the pulley block 43 comprises four pulleys. A first end of the elastic band 45 is fixed on the belt wheel 41, and a second end of the elastic band 45 twines around the four pulleys in turn, to provide a resistance and a restoring force when the belt wheel 41 rotates.

A connecting bracket 37 is inclinedly mounted between the supporting rod 30 and the main machine frame 10. The power generation device 50 comprises an electric generator 51 mounted on the connecting bracket 37, and a driving belt 53.

The electric generator 51 is embodied as a coreless generator with rare earth permanent magnet, which comprises an input shaft 511. The driving belt 53 is roughly in a shape of ring. A first end of the driving belt 53 sleeves the input shaft 511, and a second end of the driving belt 53 sleeves the belt wheel 41, in such a manner that the belt wheel 41 could drive the input shaft 511 to rotate to generate electricity, when the belt wheel 41 rotates.

The electric generator 51 generates currents of different voltages according to a rotating speed of the belt wheel 41. The currents charges the storage battery 70. In the embodiment, the exercise rowing machine with power generation 100 further comprises an inverter 80 connected with the storage battery 70. Electric energy stored by the storage battery 70 is adjusted by the inverter 80 to become an alternating current of 220V and 50Hz, which could be used for interior lighting or household appliances.

In order to prevent the driving belt 53 from looseness and weakness after a long period of using, the exercise rowing machine with power generation 100 further comprises a pressing device 60. The pressing device 60 comprises an oscillating rod 61, a pinch roller 63 and an elastic element 65. The oscillating rod 61 is approximately bar-shaped, wherein a middle portion of the oscillating rod 61 extends to form a rotating shaft 611 rotatably mounted on the connecting bracket 37. The pinch roller 63 is pivotally connected with a first end of the oscillating rod 61. A first end of the elastic element 65 is fixed on the main machine frame 10, and a second end of the elastic element 65 is fixed on a second end of the oscillating rod 61, which is away from the pinch roller. When the elastic element 65 acts on the second end of the oscillating rod 61, which is connected with the elastic element 65, the oscillating rod 61 will rotate about the rotating shaft 611 slightly, in such a manner that the pinch roller 63 and the driving belt 53 resist against each other, and the driving belt 53 twines around the input shaft 511 of the electric generator 51 more tightly.

In use of the exercise rowing machine with power generation 100, an exerciser sits on the seat cushion 20, and feet are displaced on the pedals 15. The exerciser leans forward, and his hands hold the holding rod 33 tightly. The exerciser pulls the holding rod 33 backward to overcome a resistance of the damping device 40. Meanwhile, exerciser applies force by legs to move the whole body and the seat cushion 20 towards a rear portion of the main machine frame 10, in such a manner that muscles of abdomen, hands, and legs could be exercised simultaneously. In addition, the detecting device 31 detects the rotating speed of the belt wheel 41 to transfer the rotating speed into sporting data (e.g., calories expended, and electric energy generated) of the exerciser, and the sporting data are shown on a display screen (not shown in the figures) of the detecting device 31.

The exercise rowing machine with power generation 100 described as above has a simple structure, convenient operations, and a safe and eco-friendly course of electricity generating. The exercise rowing machine with power generation 100 not only exercises the body of the exerciser, but also stores the energy generated during the exercise for later use. In some degree, the exercise rowing machine with power generation 100 saves energy and protects environment.

It could be understood that the pedals 15, the connecting bracket 37, the pressing device 60, and the detecting device 31 could be omitted.

One skilled in the art will understand that the embodiment of the present invention as shown in the drawings and described above is exemplary only and not intended to be limiting.

It will thus be seen that the objects of the present invention have been fully and effectively accomplished. Its embodiments have been shown and described for the purposes of illustrating the functional and structural principles of the present invention and is subject to change without departure from such principles. Therefore, this invention includes all modifications encompassed within the spirit and scope of the following claims.

## Claims

1. An exercise rowing machine with power generation, comprising:
a main machine frame;
a seat cushion, slidably mounted on said main machine frame;
a supporting rod, mounted on said main machine frame;
a holding rod, mounted on said supporting rod;
a damping device, comprising:
a belt wheel, rotatably mounted on said supporting rod, and connected with said holding rod through a traction band, and
a pulley block, mounted on said main machine frame, and connected with said belt wheel through an elastic band;
a power generation device, comprising:
an electric generator, mounted between said main machine frame and said supporting rod, wherein said electric generator comprises an input shaft, and
a driving belt, connecting said belt wheel with said input shaft of said electric generator; and
a storage battery, connected with said electric generator, for storing electric energy produced by said electric generator.

2. The exercise rowing machine with power generation, as recited in claim 1, wherein two pedals are mounted on said main machine frame.

3. The exercise rowing machine with power generation, as recited in claim 2, wherein a belt is provided on each of said pedals for fixing feet of a user.

4. The exercise rowing machine with power generation, as recited in claim 1, further comprising a connecting bracket, connecting said main machine frame with said supporting rod, wherein said electric generator is mounted on said connecting bracket.

5. The exercise rowing machine with power generation, as recited in claim 4, further comprising a pressing device, wherein said pressing device comprises:
an oscillating rod, a pinch roller, pivotally connected with a first end of said oscillating rod, and an elastic element acting on a second end of said oscillating rod, a middle portion of said oscillating rod is rotatably mounted on said connecting bracket, and said pinch roller resists against said driving belt.

6. The exercise rowing machine with power generation, as recited in claim 1, further comprising a detecting device mounted on a top portion of said supporting rod, and used to detect a rotating speed of said belt wheel.

7. The exercise rowing machine with power generation, as recited in claim 1, wherein said electric generator is a coreless generator with rare earth permanent magnet.

8. The exercise rowing machine with power generation, as recited in claim 1, further comprising an inverter for adjusting an output current of said storage battery.
